# EUROPÄISCHE PATENTSCHRIFT

(11) **EP 2 383 610 B1**
(45) Veröffentlichungstag und Bekanntmachung des Hinweises auf die Patenterteilung: **24.10.2012**
(21) Anmeldenummer: 11163881.3
(22) Anmeldetag: 27.04.2011
(51) Int. Cl.: G03B 21/16, G03B 21/28, G09F 19/18

(54) **Zweifach Video-Projektionseinrichtung**
Double video projection device
Dispositif de projection vidéo en double

(30) Priorität: 27.04.2010 DE 202010006166 U
(43) Veröffentlichungstag der Anmeldung: 02.11.2011
(73) Patentinhaber: Wall AG, 10117 Berlin (DE)
(72) Erfinder: Dunker, Hans-Peter, 12167 Berlin (DE)
(74) Vertreter: Bittner, Thomas L.

(56) Entgegenhaltungen:
- WO-A1-2008/124977
- WO-A1-2011/000545
- CN-Y- 2 727 771
- DE-A1- 4 235 640
- DE-A1- 19 606 227
- JP-A- 2000 221 591
- JP-A- 2006 301 244

## Beschreibung

Die Erfindung betrifft eine Video-Projektionseinrichtung.

### Hintergrund der Erfindung

Anlagen zur Video-Projektion verfügen üblicherweise über einen sogenannten Projektor, mit dem Bildsignale erzeugt und über eine Optik abgegeben werden sowie eine Projektionsfläche, auf der die Bilder dargestellt werden. Es wurde vorgeschlagen, Video-Projektionsanlagen im öffentlichen Raum zur Darstellung von Videobildern zu nutzen, zum Beispiel auf Bahnhöfen oder in Haltestellenbereichen. Eine solche Video-Projektsanlage wird in dem Dokument DE 195 06 962 A1 beschrieben.

Der Einsatz von Video-Projektionseinrichtungen im öffentlichen Raum stellt besondere Anforderungen hinsichtlich einer optimierten und flexiblen konstruktiven Gestaltung der Anlage. Es besteht deshalb Bedarf für verbesserte Video-Projektionseinrichtungen, die insbesondere auch auf Bahnhöfen oder anderen öffentlich zugänglichen Bereichen einsetzbar sind.

Das Dokument JP 2000-221591 offenbart eine Projektionseinrichtung mit zwei Flüssigkristallvideoprojektoren. Die Einrichtung weist einen Zwischenbereich auf, der zwischen sich gegenüberliegenden Projektionsausgängen der beiden Projektoren gebildet ist. In dem Zwischenbereich ist ein zweiseitiger Spiegel drehbar angeordnet und derart orientiert, dass die Videoprojektion von dem einem Projektor zu einem ersten Bildschirm und die Videoprojektion von dem anderen Projektor zu einem zweiten Bildschirm umgelenkt wird. Die Projektionseinrichtung weist darüber hinaus ein Gehäuse auf, in welchem die beiden Projektoren und der zweiseitige Spiegel aufgenommen sind.

### Zusammenfassung der Erfindung

Aufgabe der Erfindung ist es, eine verbesserte Video-Projektionseinrichtung anzugeben, die einen flexiblen Einsatz in öffentlichen Gebäuden oder Einrichtungen ermöglicht, insbesondere zu Informations- und Werbezwecken.

Diese Aufgabe wird erfindungsgemäß durch eine Video-Projektionseinrichtung nach dem unabhängigen Anspruch 1 gelöst. Vorteilhafte Ausgestaltungen der Erfindung sind Gegenstand von abhängigen Unteransprüchen.

Die Erfindung umfasst den Gedanken einer Video-Projektionseinrichtung mit den Merkmalen gemäß Anspruch 1.

Der erfindungsgemäße Aufbau der Video-Projektionseinrichtung ermöglicht eine platzsparende Konstruktion der Anlage, so dass diese auch im Fall beengter Raumverhältnisse den Anforderungen im öffentlichen Raum entsprechend angeordnet werden kann. Die Video-Projektionseinrichtung stellt flexible Einsatzoptionen zur Verfügung, insbesondere aufgrund der platzsparenden Integration von zwei Projektoren und der vorgesehenen seitlichen Abstrahlung der Videobilder in entgegengesetzte Richtungen. Insbesondere im Bahnhofs- oder Haltestellenbereich ist so eine Anpassung an unterschiedlichste Anwendungs- und Raumverhältnisse ermöglicht.

Eine bevorzugte Weiterbildung der Erfindung sieht vor, dass mit der Gehäusestruktur ein gemeinsames Gehäuse für die Anlagenelemente gebildet ist. In einer Ausgestaltung ist das gemeinsame Gehäuse für die Anlagenelemente im Wesentlichen als geschlossenes Gehäuse gebildet. Bei dieser und anderen Ausführungsformen kann vorgesehen sein, dass die Gehäusestruktur aus mehreren Wand- und / oder Kastenelementen zusammengesetzt ist. Die Elemente können lösbar oder nicht lösbar miteinander verbunden sein.

Die Temperierungseinrichtungen sind vorzugsweise konfiguriert, eine Umgebungsluft für die beiden Projektoren und wahlweise für andere Anlagenelemente in gewünschter Art und Weise zu temperieren, vorzugsweise zu kühlen. Auf diese Weise ist es zum Beispiel ermöglicht, die von den Projektoren im Betrieb erzeugte Wärme effizient abzuführen, was die Lebensdauer der Projektionsanlagen erhöht.

Bei der Umlufttemperierung ist vorzugsweise ein Luftstrom entlang der Innenseite des zugeordneten Gehäuseabschnittes gebildet, der um den jeweiligen Projektor herum strömt. Die Luft strömt dann insbesondere entlang von Kanalabschnitten, die zwischen den Seitenwänden der Projektoren und den zugeordneten Gehäusewänden gebildet sind.

Vorzugsweise sind in einer Ausgestaltung den Projektoren gegenüberliegende Abschnitte des Gehäuses frei von Lufteinlass- / Luftauslassöffnungen.

Bei einer vorteilhaften Ausgestaltung der Erfindung kann vorgesehen sein, dass die Lufteinlassöffnungen im Bereich gegenüberliegender Schmalseiten der Gehäusestruktur und die Luftauslassöffnungen im Bereich voneinander abgewandter Schmalseiten der Gehäusestruktur gebildet sind. Auf diese Art und Weise strömt die Luft zwischen den einander zugeordneten Lufteinlass- und Luftauslassöffnungen für die Projektoren gegenläufig.

In einer Ausgestaltung nimmt der Luftströmungsabschnitt oberhalb des jeweiligen Projektors einen Bereich zwischen der Oberseite des Projektors und einem Montageabschnitt am oberen Ende des Gehäuses im Wesentlichen vollständig ein. In diesen und anderen Ausfiihrungsformen sind zur Umwälzung der Luft geeignete Ventilatoren innerhalb und / oder außerhalb der Gehäusestruktur gebildet.

Bei einer zweckmäßigen Ausgestaltung der Erfindung kann vorgesehen sein, dass im Zwischenbereich und den Projektionsausgängen vorgelagert jeweils eine Schalteinrichtung angeordnet ist, mit dem der zugeordnete Projektionsausgang zeitweise geblockt werden kann. Bei einer Weiterbildung ist die Schalteinrichtung jeweils mit einem schwenkbaren Element ausgeführt, welches in den Strahlengang vor den zugeordneten Projektionsausgang geschwenkt oder aus diesem heraus bewegt werden kann. Mit Hilfe der Schalteinrichtung können einer der Projektionsausgänge oder beide Projektionsausgänge beliebig geöffnet oder geschlossen werden.

In einer Weiterbildung der Erfindung ist vorgesehen, dass die Versorgungs- und Steuerungseinrichtung über eine kabelgebundene oder eine kabellose Datenleitung zu einer Steuerzentrale verfügt, über die insbesondere Videodaten an die Projektoren geliefert werden können. Aber auch Steuer- und / oder Überwachungssignalen können so bidirektional ausgetauscht werden. Hierbei sieht eine Ausgestaltung vor, dass die Projektoren zusammen mit der zugeordneten Versorgungs- und Steuereinrichtung im Wesentlichen nur als eine Art Abspielgerät ausgeführt sind, so dass die darzustellenden Videodaten stets aktuell an den Projektor geliefert und umgehend dargestellt werden. Die Aufbereitung und Konfektionierung der Videodaten erfolgt in der Steuerzentrale, die mit geeigneten Systemkomponenten ausgestattet ist, zum Beispiel einer oder mehreren Datenbanken. Die Anbindung kann beispielsweise über eine sogenannte USB-Box erfolgen. Die Versorgungs- und Steuereinrichtung verfügt darüber hinaus vorzugsweise über eine lokale Mikroprozessoreinrichtung mit einem Mikroprozessor und einem Speicher. Darüber hinaus ist eine Spannungsversorgungseinheit vorgesehen, die wahlweise Spannungen unterschiedlicher Größe bereitstellt. Es kann ein Ethernet-Anschluss vorgesehen sein. Auch eine Anschlussmöglichkeit für ein Lichtleiterkabel zur Übertragung von Daten über einen Lichtwellenleiter kann vorgesehen sein.

### Beschreibung bevorzugter Ausführungsbeispiele

Die Erfindung wird im Folgenden anhand von bevorzugten Ausführungsbeispielen unter Bezugnahme auf Figuren einer Zeichnung näher erläutert. Hierbei zeigen:
- Fig. 1: eine perspektivische Darstellung einer Gehäusestruktur für eine Video-Projektionseinrichtung mit zwei Projektoren,
- Fig. 2: die Gehäusestruktur aus Fig. 1 von vom und von der Seite und
- Fig.: 3 eine schematische Darstellung der Anordnung von Anlagenelementen einer Video-Proj ektionseinrichtung mit zwei Projektoren

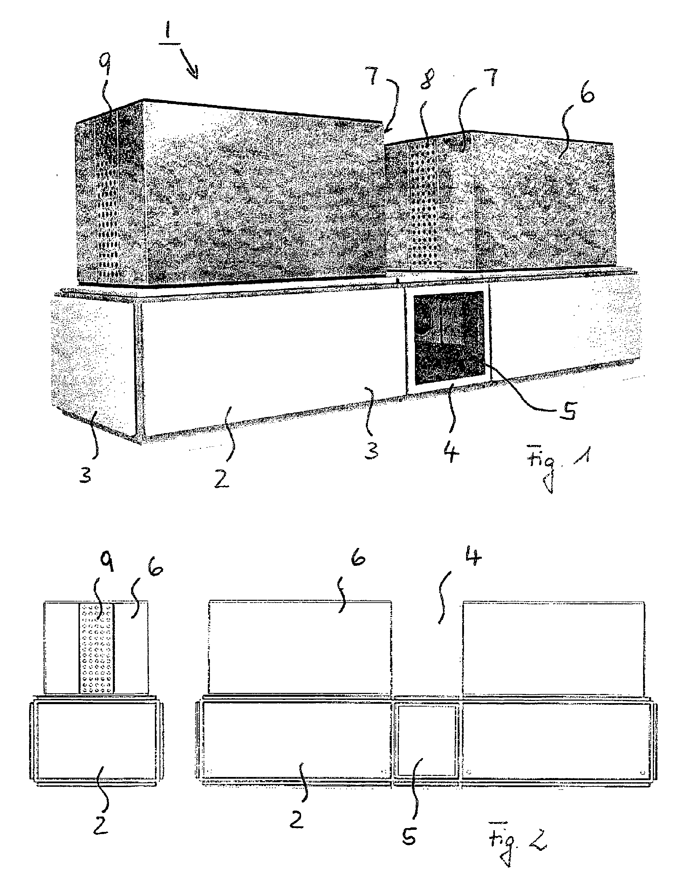

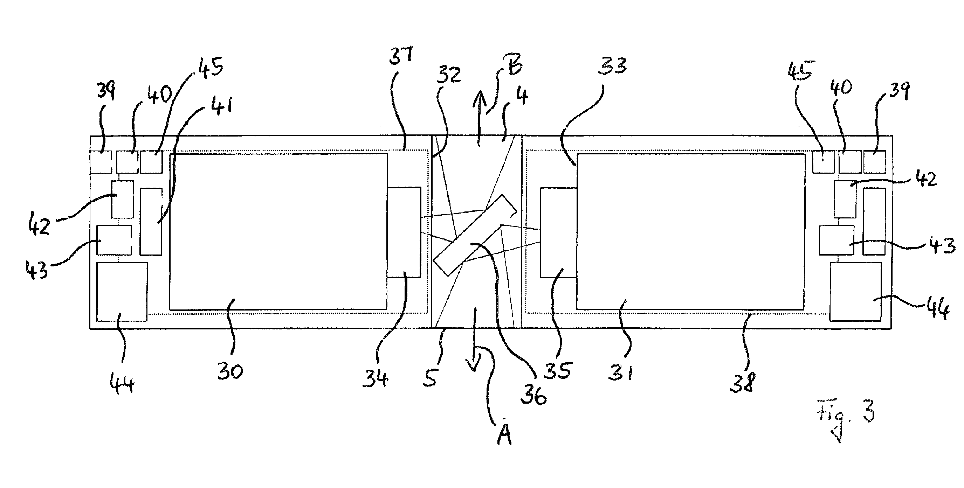

Fig. 1 zeigt eine perspektivische Darstellung einer Gehäusestruktur 1 für eine Video-Projektionseinrichtung mit zwei Projektoren, die in einem unteren Gehäuseabschnitt 2 einander gegenüberliegend (vgl. weitere Details in Fig. 3 unten) angeordnet sind. Im unteren Gehäusebereich 2 sind Gehäusewandabschnitte 3 frei von Öffnungen als geschlossene Gehäusewandabschnitte ausgeführt. In einem Zwischenbereich 4 ist beidseitig, also sowohl auf der in Fig. 1 gezeigten Vorderseite als auf der in Fig. 1 nicht gezeigten Rückseite, ein optisches Fenster 5 gebildet, durch welches hindurch die Videoprojektion erfolgt.

In einem oberen Gehäuseabschnitt 6 sind auf Schmalseiten 7 Lufteinlassöffnungen 8 sowie Luftauslassöffnungen 9 gebildet, durch welche hindurch Luft in die Gehäusestruktur 1 gelangt und diese wieder verlässt. Die angesaugte Luft dient zur Ausbildung eines kühlenden Luftstroms innerhalb der Gehäusestruktur 1, um die im unteren Gehäuseabschnitt 2 angeordneten Projektoren sowie wahlweise weitere Anlagenelemente im Betrieb zu kühlen. Der Luftumlauf wird mit Hilfe von in der Gehäusestruktur 1 angeordneten Ventilatoren (nicht gezeigt) bewirkt. Zwischen den Lufteinlass- und den Luftauslassöffnungen 8, 9 bildet sich in der Gehäusestruktur ein Luftkanal.

Die dargestellte Gehäusestruktur 1 ist für eine hängende Montage konfiguriert, was bedeutet, dass die Aufhängung im Bereich des oberen Gehäuseabschnittes 6 erfolgt, so dass der untere Gehäuseabschnitt 2 beispielsweise beabstandet von einer Decke angeordnet ist. Die schmale Bauform der Gehäusestruktur 1 ermöglicht eine optimierte Integrierung in Einrichtungen im öffentlichen Raum, zum Beispiel längs eines Bahnsteiges auf einem Bahnhof oder in einem Haltestellenbereich. Aber auch in anderen Bereichen des öffentlichen Raumes kann die Gehäusestruktur 1 eingesetzt werden, um Videodarstellungen zu zeigen, insbesondere zu Informations- und / oder Werbezwecken. Die massive und geschlossene Gehäusestruktur 1 bietet darüber hinaus einen optimalen Schutz gegen ungewünschte Einwirkungen von Außen, beispielsweise auch Vandalismus.

Fig. 2 zeigt die Gehäusestruktur aus Fig. 1 von vom und von der Seite.

Fig. 3 zeigt eine schematische Darstellung der Anordnung von zwei Projektoren 30, 31 in der Gehäusestruktur 1 nach den Fig. 1 und 2. Die beiden Projektoren 30, 31 sind mit einer jeweiligen Schmalseite 32, 33 einander gegenüberliegend angeordnet. Den Schmalseiten 32, 33 gegenüberliegend sind Schalter 34, 35 angeordnet, mit dem der Videoausgang eines jeweils zugeordneten Projektionsausganges geöffnet und geschlossen werden kann. Im geöffneten Zustand der Schalteinrichtungen 34, 35 gelangt das abgegebene Videolicht auf die Vorder- bzw. die Rückseite eines Umlenkelementes 36, welches beispielsweise als ein zweiseitiger Spiegel ausgeführt ist. Auf diese Weise wird die Videoprojektion umgelenkt, so dass durch das optische Fenster 5 im Zwischenbereich 4 eine Projektion in entgegengesetzte Richtungen erfolgt, die in Fig. 3 mittels der Pfeile A, B dargestellt sind. Das Umlenkelement 36 ist drehbar gelagert.

Den beiden Projektoren 30, 31 ist eine jeweilige Temperierungseinheit 37, 38 (gestrichelte Linien) zugeordnet, die zur Kühlung im Betrieb dient, insbesondere mittels Umlufttemperierung.

Fig. 3 ist weiterhin zu entnehmen, dass den beiden Projektoren 30, 31 jeweils die folgenden Komponenten zugeordnet sind: Spannungsversorgungen für 12 und 24 Volt 39, 40, ein Ethernet-Anschluss 41, ein Anschluss für ein Lichtwellenleiterkabel 42, eine I/O-USB-Box 43 sowie eine Mikroprozessoreinrichtung 44. Eine weitere Komponenten 45 betrifft einen 220 Volt-Anschluss. Die Anschluss- und Versorgungskomponenten dienen in dieser oder einer beliebigen anderen Kombination von notwendigen Komponenten zum Betrieb der Projektoren 30, 31.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Video-Projektionseinrichtung, mit:
- zwei Projektoren (30, 31),
- zwei zugeordneten Versorgungs- und Steuereinrichtung, die jeweils einem der beiden Projektoren (30, 31) zugeordnet sind,
- einem Zwischenbereich (4), der zwischen sich gegenüberliegenden Schmalseiten (7) der beiden Projektoren (30, 31) gebildet ist, wobei auf den Schmalseiten (7) ein jeweiliger Projektionsausgang der beiden Projektoren (30, 31) gebildet ist,
- einem Umlenkelement (36), welches in dem Zwischenbereich (4) drehbar angeordnet und derart orientiert ist, dass im Betrieb eine Videoprojektion aus einem der Projektionsausgänge auf der Vorderseite des Umlenkelementes (36) in eine Richtung (A) im Wesentlichen quer zur Projektionsrichtung des einen Projektionsausganges zu einer Seite hin und eine Videoprojektion aus dem anderen Projektionsausgang auf der Rückseite des Umlenkelementes (36) in einer entgegengesetzten Richtung (B) im Wesentlichen quer zur Projektionsrichtung des anderen Projektionsausganges zu einer entgegengesetzten Seite hin umgelenkt wird, und
- einer Gehäusestruktur (1), die Anlagenelemente aufnimmt, nämlich zumindest die Projektoren (30, 31), die zugeordneten Versorgungs- und Steuereinrichtungen sowie das Umlenkelement (36),
**dadurch gekennzeichnet, dass** die Gehäusestruktur für eine hängende Montage konfiguriert ist und den beiden Projektoren (30, 31) jeweils eine Temperierungseinrichtung (37, 38) zugeordnet ist, mit der um den Projektor (30, 31) herum jeweils eine zugeordnete Umlufttemperierung in getrennten Gehäuseabschnitten der Gehäusestruktur (1) gebildet ist und die mit zugeordneten Lufteinlass- / Luftauslassöffnungen (8, 9) in der Gehäusestruktur (1) gebildet ist, derart, dass zwischen den Lufteinlass- und den Luftauslassöffnungen (8, 9) in der Gehäusestruktur (1) ein Luftkanal gebildet ist, bei dem ein Luftströmungsabschnitt jeweils oberhalb des Projektors (30; 31) und im Wesentlichen frei von Anlagenelementen gebildet ist.

2. Video-Projektionseinrichtung nach Anspruch 1, **dadurch gekennzeichnet, dass** mit der Gehäusestruktur (1) ein gemeinsames Gehäuse für die Anlagenelemente gebildet ist.

3. Video-Projektionseinrichtung nach Anspruch 1 oder 2, **dadurch gekennzeichnet, dass** die Lufteinlassöffnungen (8) im Bereich gegenüberliegender Schmalseiten der Gehäusestruktur (1) und die Luftauslassöffnungen (9) im Bereich voneinander abgewandter Schmalseiten der Gehäusestruktur (1) gebildet sind.

4. Video-Projektionseinrichtung nach mindestens einem der vorangehenden Ansprüche, **dadurch gekennzeichnet, dass** im Zwischenbereich (4) und den Projektionsausgängen vorgelagert jeweils eine Schalteinrichtung (34, 35) angeordnet ist, mit dem der zugeordnete Projektionsausgang zeitweise geblockt werden kann.

## Claims

1. a video-projection device, comprising:
- two projectors (30, 31),
- two associated supply and control devices, which are each assigned to one of the two projectors (30, 31),
- a buffer region (4) which is formed between opposite narrow sides (7) of the two projectors (30, 31), wherein a respective projector output of the two projectors (30, 31) is formed on the narrow sides (7),
- a deflection element (36) which is arranged in a rotatable manner in the buffer region (4) and is oriented such that in operation, one video projection from one of the projection outputs on the front face of the deflection element (36) is deflected to one side in a direction (A), substantially transverse to the projection direction of the one projection output, and one video projection from the other projection output on the rear face of the deflection element (36) is deflected towards an opposite side in a direction (B), substantially transverse to the projection direction of the other projection output, and
- a housing structure (1) which holds system elements, namely at least the projectors (30, 31), the associated supply and control devices and the deflection element (36),
the housing structure is configured for a suspended assembly and a temperature regulating device (37, 38) is assigned to each of the two projectors (30, 31), with each of which an associated temperature regulation of the circulating air s formed around the projector (30, 31) in separate housing sections of the housing structure (1) and each of which is formed with associated air inlet / outlet openings (8, 9) in the housing structure (1), such that between the air inlet / outlet openings (8, 9) in the housing structure (1) an air channel is formed, in which an air flow section is formed above each projector (30; 31) and substantially free of system elements.

2. The video-projection device according to Claim 1, **characterized in that** a common housing is formed with the housing structure (1) for the system elements.

3. The video-projection device according to Claim 1 or 2, **characterized in that** the air inlet openings (8) are formed in the region of opposite narrow sides of the housing structure (1), and the air outlet openings (9) are formed in the region of narrow sides of the housing structure (1) which face away from each other.

4. The video-projection device according to at least one of the preceding claims, **characterized in that** in the buffer region (4) and upstream of the projection outputs, one switching device (34, 35) each is arranged, with which the associated projection output can be temporarily blocked.

## Revendications

1. Dispositif de projection vidéo comprenant:
- deux projecteurs (30, 31),
- deux dispositifs d'alimentation et de commande attribués, qui sont attribués respectivement à l'un des deux projecteurs (30, 31),
- une zone intermédiaire (4), qui est formée entre des côtés étroits (7) qui se font face des deux projecteurs (30, 31), une sortie de projection respective des deux projecteurs (30, 31) étant formée sur les côtés étroits (7),
- un élément de déviation (36), qui est disposé de façon rotative dans la zone intermédiaire (4) et est orienté de telle sorte que, pendant le fonctionnement, une projection vidéo provenant de l'une des sorties de projection sur le côté avant de l'élément de déviation (36) est déviée dans une direction (A) sensiblement transversalement au sens de projection de l'une des sorties de projection en direction d'un côté et une projection vidéo provenant de l'autre sortie de projection sur l'arrière de l'élément de déviation (36) est déviée dans une direction (B) opposée sensiblement transversalement à la direction de projection de l'autre sortie de projection en direction d'un côté opposé, et
- une structure de boîtier (1), qui reçoit des éléments d'installation, à savoir au moins les projecteurs (30, 31), les dispositifs d'alimentation et de commande attribués ainsi que l'élément de déviation (36),
**caractérisé en ce que** la structure de boîtier est configurée pour un montage suspendu et un dispositif de mise à température (37, 38) est attribué à chacun des deux projecteurs (30, 31), dispositif avec lequel à chaque fois une mise à température dans l'air ambiant attribuée est formée autour du projecteur (30, 31) dans des tronçons de boîtier séparés de la structure de boîtier (1) et qui est formé avec des ouvertures d'entrée/sortie d'air (8, 9) associées dans la structure de boîtier (1), de telle sorte qu'un canal d'air est formé entre les ouvertures d'entrée d'air et les ouvertures de sortie d'air (8, 9) dans la structure de boîtier (1), canal dans lequel une partie d'écoulement d'air est formée respectivement au-dessus du projecteur (30 ; 31) et sensiblement exempte d'éléments d'installation.

2. Dispositif de vidéoprojection selon la revendication 1, **caractérisé en ce qu'**un boîtier commun pour les éléments d'installation est formé avec la structure de boîtier (1).

3. Dispositif de vidéoprojection selon la revendication 1 ou 2, **caractérisé en ce que** les ouvertures d'entrée d'air (8) sont formées dans la zone de côtés étroits opposés de la structure de boîtier (1) et les ouvertures de sortie d'air (9) dans la zone de côtés étroits opposés les uns aux autres de la structure de boîtier (1).

4. Dispositif de vidéoprojection selon au moins l'une des revendications précédentes, **caractérisé en ce qu'**à chaque fois un dispositif de commutation (34, 35) est disposé dans la zone intermédiaire (4) et placé en amont des sorties de projection, dispositif avec lequel la sortie de projection attribuée peut être bloquée temporairement.
